# EUROPEAN PATENT APPLICATION

(11) **EP 3 792 833 A2**
(43) Date of publication of application: **17.03.2021**
(21) Application number: 20190423.2
(22) Date of filing: 11.08.2020
(51) Int. Cl.: G06N 3/04, G06N 3/08

(54) **RESERVOIR COMPUTER, RESERVOIR DESIGNING METHOD, AND RESERVOIR DESIGNING PROGRAM**

(30) Priority: 12.09.2019 JP 2019166315
(71) Applicant: FUJITSU LIMITED, Kanagawa 211-8588 (JP)
(72) Inventor: MIYAHARA, Shoichi, Kawasaki-shi, Kanagawa 211-8588 (JP)
(74) Representative: Haseltine Lake Kempner LLP

(57) **Abstract**

A reservoir designing method executed by a computer configured to control a neural network including a reservoir and an output layer, the reservoir including a plurality of nodes and having a coupling structure randomly determined between the plurality of nodes, the output layer having a weight set on each node of the plurality of nodes. In an example, the method includes: changing the coupling structure between the plurality of nodes included in the reservoir; computing an output for an input to the neural network; updating the weight of the output layer based on the output for each of the coupling structures changed by the changing; evaluating the output according to a predetermined criterion; and selecting a predetermined coupling structure from the coupling structures changed by the changing based on an evaluation result obtained by the evaluating.

## Description

### FIELD

The embodiments discussed herein are related to a reservoir computer, a reservoir designing method, and a reservoir designing program.

### BACKGROUND

Recently, it is known that it is very difficult to update an interlayer weight by backpropagation, particularly in a multilayer recurrent neural network (RNN), and various improvement methods have been studied. Therefore, attention has been focused on an RNN algorithm called reservoir computing for updating a weight of only an output layer.

Here, the RNN is known as machine learning suitable for handling time-series data. Since the RNN has a structure including a loop inside the network, the RNN may have a correlation between past data and current data as a weighting. The RNN is expected to be applied to dynamic judgment in video processing, natural language processing, and the like.

The reservoir computing is a special type of RNN that has a structure called a "reservoir" by a random and fixed coupling rather than a multi-layered coupling as in deep learning. The coupling structure (network) between nodes in the reservoir is determined prior to learning. For example, when the reservoir is mounted in a circuit such as a field-programmable gate array (FPGA), the coupling structure is uniformly and randomly determined at the time of design. Also, the learning of the RNN having the reservoir proceeds while the coupling between the nodes of the reservoir is fixed, and only the weight of the output layer is updated. When the learning is completed, the output weight is fixed and output data is obtained.

Examples of the related art include Japanese Laid-open Patent Publication No. 2018-180701 and International Publication Pamphlet No. WO 2016/194248.

### SUMMARY

### [TECHNICAL PROBLEM]

However, there is a problem that reservoir computing of related art may have difficulties efficiently obtaining a useful reservoir.

For example, in the reservoir computing of the related art, the problem may be solved even when there is no bias in a coupling structure between nodes of the reservoir and the coupling structure is uniformly random. On the other hand, in such cases, accuracy may be poor, a large number of learning steps may be desired, and a large number of nodes may be desired to improve the problem.

Furthermore, depending on the problem to be solved, it may be better to use a network with a biased structure as a reservoir. How much the bias in the coupling network between the nodes is desired depends on the problem.

It is desirable to efficiently obtain a useful reservoir.

### [SOLUTION TO PROBLEM]

According to an embodiment of one aspect, provided is a reservoir designing method executed by a computer configured to control a neural network including a reservoir and an output layer, the reservoir including a plurality of nodes and having a coupling structure randomly determined between the plurality of nodes, the output layer having a weight set on each node of the plurality of nodes. In an example, the method includes: changing the coupling structure between the plurality of nodes included in the reservoir; computing an output for an input to the neural network; updating the weight of the output layer based on the output for each of the coupling structures changed by the changing; evaluating the output according to a predetermined criterion; and selecting a predetermined coupling structure from the coupling structures changed by the changing based on an evaluation result obtained by the evaluating.

### [ADVANTAGEOUS EFFECTS OF INVENTION]

In an embodiment of one aspect, the useful reservoir may be efficiently obtained.

### BRIEF DESCRIPTION OF DRAWINGS

FIG. 1 is a diagram for explaining reservoir computing;
FIG. 2 illustrates a configuration example of the reservoir computer;
FIG. 3 is a flowchart illustrating a flow of reservoir design processing according to Embodiment 1;
FIG. 4 is a flowchart illustrating a flow of coupling structure change processing according to Embodiment 1;
FIG. 5 is a flowchart illustrating a flow of the coupling structure change processing according to Embodiment 2;
FIG. 6 is a diagram for explaining a genetic algorithm;
FIG. 7 is a flowchart illustrating a flow of coupling structure change processing of a first generation according to Embodiment 3;
FIG. 8 is a flowchart illustrating a flow of coupling structure change processing of a K-th generation according to Embodiment 3;
FIG. 9 illustrates results of an experiment; and
FIG. 10 is a diagram for explaining a hardware configuration example.

### DESCRIPTION OF EMBODIMENT(S)

Embodiments of a reservoir computer, a reservoir designing method, and a reservoir designing program according to embodiments of the present invention will be described below in detail, by way of example only, with reference to drawings. The embodiment does not limit the present invention. In addition, respective embodiments may be combined with each other as appropriate without contradiction.

### [Embodiment 1]

### [Reservoir Computing]

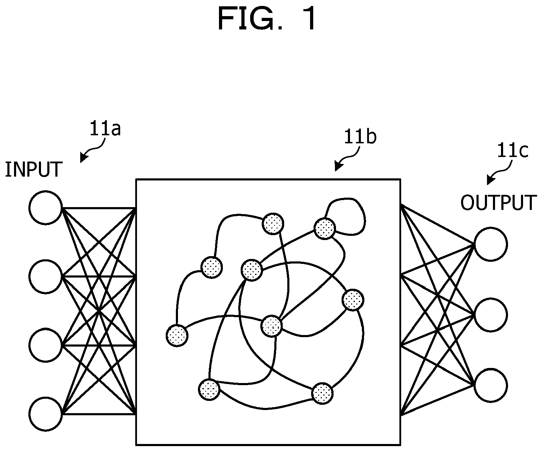

First, reservoir computing will be described with reference to FIG. 1. FIG. 1 is a diagram for explaining the reservoir computing. As illustrated in FIG. 1, a neural network in the reservoir computing has an input layer 11a, a reservoir 11b, and an output layer 11c.

In the example of FIG. 1, each circle with a pattern is a node of the reservoir 11b. As described above, in a method of related art, the weight between the nodes of the reservoir is randomly determined and fixed in advance, and then learning of the weight of the output layer is performed.

### [Functional Configuration]

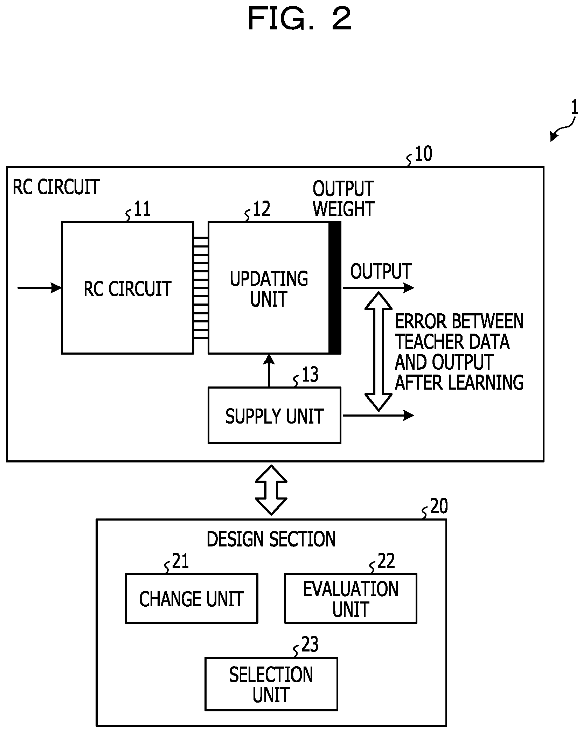

A configuration of a reservoir computer according to an embodiment will be described with reference to FIG. 2. FIG. 2 illustrates a configuration example of the reservoir computer. As illustrated in FIG. 2, the reservoir computer 1 has a reservoir computing (RC) circuit 10 and a design section 20.

The RC circuit 10 has a computation unit 11, an updating unit 12, and a supply unit 13. The computation unit 11 computes an output for an input to a neural network including a reservoir that includes a plurality of nodes and has a coupling structure randomly determined between the plurality of nodes, and an output layer having a weight set on each node of the plurality of nodes. At least a reservoir portion of the computation unit 11 may be a field-programmable gate array (FPGA).

The updating unit 12 updates the weight of the output layer. Further, the coupling structure of the reservoir is randomly determined in an initial state, and then changed by the change unit 21 described later. The updating unit 12 updates the weight of the output layer based on the output computed by the computation unit 11 for each of the coupling structures changed by the change unit 21. At this time, the updating unit 12 updates the weight of the output layer so that the error between teacher data (may be referred to as "training data") and the output becomes small. The teacher data is supplied to the updating unit 12 by the supply unit 13.

The design section 20 has a change unit 21, an evaluation unit 22, and a selection unit 23. The change unit 21 changes the coupling structure between the nodes of the reservoir. For example, the change unit 21 changes the coupling structure by rewriting the FPGA that functions as the reservoir. For example, the change unit 21 changes the coupling structure by a predetermined number of times.

Here, the coupling structure of the reservoir is logically represented by using an adjacency matrix having the same number of rows and columns as the nodes that may be included in the reservoir. At this time, since each component of the adjacency matrix represents the weight between the plurality of nodes included in the reservoir, the change unit 21 may determine the weight by changing each component. Further, since the nodes of the reservoir do not have to be fully coupled, the component of the adjacency matrix may be 0.

For example, the change unit 21 may randomly determine each component of the adjacency matrix in the range of 0 or more and 1 or less, and rewrite the FPGA that functions as the reservoir so as to match the adjacency matrix. At this time, an eigenvalue of the adjacency matrix, a ratio of components having a value of 0, and the like may be set in advance as constraint conditions in accordance with a use of the reservoir and the like. Further, as the ratio of 0 components increases, the reservoir becomes sparse, and as a ratio of real number components increases, the reservoir becomes dense.

The evaluation unit 22 evaluates the output computed by the computation unit 11 according to a predetermined criterion. For example, the evaluation unit 22 computes an error of the output computed by the computation unit 11 with respect to the teacher data prepared in advance, as the evaluation result.

The selection unit 23 selects a predetermined coupling structure from the coupling structures changed by the change unit 21 based on the evaluation result obtained by the evaluation unit 22. For example, the selection unit 23 selects a coupling structure such that an output error is minimized from the coupling structures changed by the change unit 21. Further, an FPGA having the coupling structure selected by the selection unit 23 may be treated as a single device that functions as an optimized reservoir. For example, the FPGA having the coupling structure selected by the selection unit 23 may be a target of transfer or the like.

### [Processing Flow]

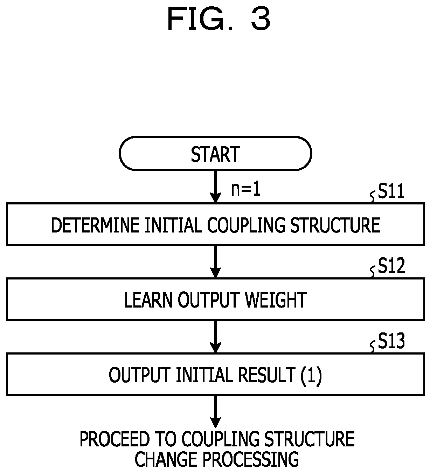

A flow of reservoir design processing will be described with reference to FIG. 3. FIG. 3 is a flowchart illustrating the flow of the reservoir design processing according to Embodiment 1. First, as illustrated in FIG. 3, the design section 20 of the reservoir computer 1 determines an initial coupling structure (step S11). An n represents the number of times of change of the coupling structure. Here, it is assumed that n = 1. Further, the design section 20 may determine the initial coupling structure by the same method as the change of the coupling structure.

Next, the RC circuit 10 learns (may be referred to as "performs training") an output weight of the output layer (step S12). Specifically, the updating unit 12 updates the output weight so that the error becomes small. Then, the computation unit 11 computes the output using the output layer where learning is completed as an initial result (step S13). After that, the reservoir computer 1 proceeds to coupling structure change processing.

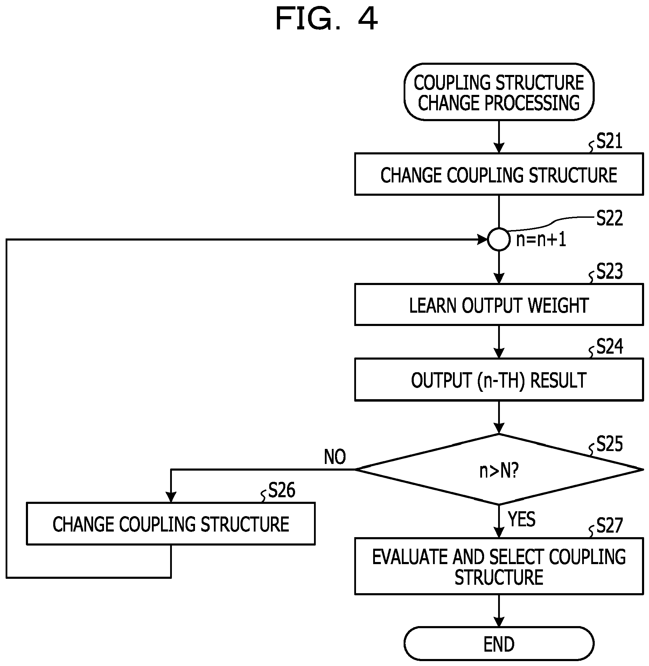

A flow of the coupling structure change processing will be described with reference to FIG. 4. FIG. 4 is a flowchart illustrating a flow of the coupling structure change processing according to Embodiment 1. As illustrated in FIG. 4, the design section 20 changes the coupling structure (step S21). For example, the design section 20 may randomly change the coupling structure under predetermined constraint conditions.

The design section 20 increases n by 1 (step S22). Then, the RC circuit 10 learns (performs training) an output weight of the output layer (step S23). Furthermore, the computation unit 11 computes the output using the output layer where learning is completed as an n-th result (step S24).

Here, N is a predetermined upper limit number of times of repetition, for example, 100. When n > N is not satisfied (step S25, No), the design section 20 further changes the coupling structure (step S26). Then, the design section 20 further increases n by 1 (step S22). Consequently, the reservoir computer 1 repeatedly executes the processing of steps S26, S22, S23, and S24 until n exceeds N.

When n > N is satisfied, the design section 20 evaluates and selects the coupling structure (step S27). For example, the design section 20 evaluates the error between the final output and the teacher data (i.e., the training data) for each coupling structure in step S24, and selects the coupling structure corresponding to the output with the minimum error.

### [Advantages]

As described above, the computation unit 11 computes the output for the input to the neural network including the reservoir that includes the plurality of nodes and has the coupling structure randomly determined between the plurality of nodes, and the output layer having the weight set on each node of the plurality of nodes. The change unit 21 changes the coupling structure between the plurality of nodes included in the reservoir. The updating unit 12 updates the weight of the output layer based on the output computed by the computation unit 11 for each of the coupling structures changed by the change unit 21. The evaluation unit 22 evaluates the output computed by the computation unit 11 according to a predetermined criterion. The selection unit 23 selects a predetermined coupling structure from the coupling structures changed by the change unit 21 based on the evaluation result obtained by the evaluation unit 22. As described above, the reservoir computer 1 may optimize the reservoir by using a meta-heuristic method. Therefore, a useful reservoir may be efficiently obtained according to Embodiment 1.

Also, the reservoir may be the field-programmable gate array (FPGA). In this case, the change unit 21 changes the coupling structure by rewriting the FPGA that functions as the reservoir. Consequently, the FPGA that functions as the optimized reservoir may be taken out and used.

The change unit 21 changes the coupling structure by the predetermined number of times. The evaluation unit 22 computes the error of the output computed by the computation unit 11 with respect to the teacher data prepared in advance, as the evaluation result. Further, the selection unit 23 selects the coupling structure with the minimum error from the coupling structures changed by the change unit 21. By predetermining the number of times of change as described above, the reservoir may be optimized using limited time and computation resources.

Embodiments of the present invention may solve the problem of the reservoir computing. As described above, the reservoir computing is a special type of RNN. Here, a background in which RNN is used will be described.

In order to break through the limit of Moore's Law, the entire IT industry is searching for a new computer architecture that is not a von Neumann type of the related art. Non-Neumann type machines are often proposed, ranging from machines that will take years to develop such as quantum computing to machines that are relatively easy to start such as FPGA, GPU, and effective use of GPU. All of these non-Neumann type machines efficiently solve a problem in a specific field that desires computational resources by avoiding a von Neumann bottleneck.

Machine learning may be considered as the problem combined with the non-Neumann type machines. Particularly in today's multi-layered deep learning, many companies are conducting research and development because many computational resources are desired. In addition, with success of the deep learning, new models of the machine learning are being developed and improved daily at research institutes and companies. From such the background, the RNN is used as the machine learning, particularly suitable for handling time-series data.

### [Embodiment 2]

In Embodiment 1, coupling structure change processing is performed until the condition of n > N is satisfied as illustrated in FIG. 4. On the other hand, a reservoir design system of Embodiment 2 terminates the coupling structure change processing at the point of time when a coupling structure such that the output error is reduced to a certain degree is obtained.

In Embodiment 2, for example, an evaluation unit 22 computes an error of output computed by a computation unit 11 with respect to teacher data prepared in advance, as an evaluation result, every time an update of a weight of an output layer is completed for each of coupling structures changed by a change unit 21. Further, when the error is equal to or less than the threshold value, a selection unit 23 selects the coupling structure corresponding to the error.

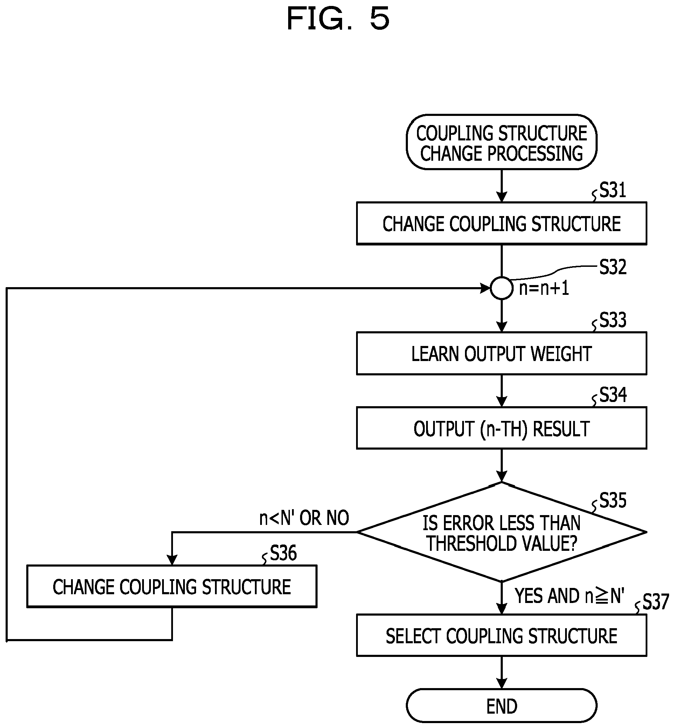

A flow of the coupling structure change processing will be described with reference to FIG. 5. FIG. 5 is a flowchart illustrating a flow of the coupling structure change processing according to Embodiment 2. As illustrated in FIG. 5, a design section 20 changes the coupling structure (step S31). The design section 20 increases n by 1 (step S32). Then, an RC circuit 10 learns an output weight of the output layer (step S33). The computation unit 11 computes the output using the output layer where learning (training) is completed as an n-th result (step S34).

### [Processing Flow]

Here, the design section 20 evaluates whether or not the error between the output and the teacher data is less than the threshold value (step S35). When the error is not less than the threshold value or when n is less than N' (step S35, No or n < N' (N' is 10, for example)), the design section 20 further changes the coupling structure (step S36). Then, the design section 20 further increases n by 1 (step S32). Consequently, a reservoir computer 1 repeatedly executes the processing of steps S36, S32, S33, and S34.

When the error is less than the threshold value and n is equal to or more than N' (step S35, Yes and n ≥ N'), the design section 20 selects the coupling structure (step S37). For example, the design section 20 evaluates the error between the final output and the teacher data for each coupling structure in step S24, and selects the coupling structure corresponding to the output with the minimum error.

### [Advantages]

The evaluation unit 22 computes the error of the output computed by the computation unit 11 with respect to the teacher data prepared in advance, as the evaluation result, every time the update of the weight of the output layer by an updating unit 12 is completed for each of coupling structures changed by the change unit 21. Further, when the error is equal to or less than the threshold value, a selection unit 23 selects the coupling structure corresponding to the error. As described above, since the processing is able to be completed at the time when the reservoir whose error is equal to or less than the threshold value is obtained, the time desired for an optimization of the reservoir may be shortened.

### [Embodiment 3]

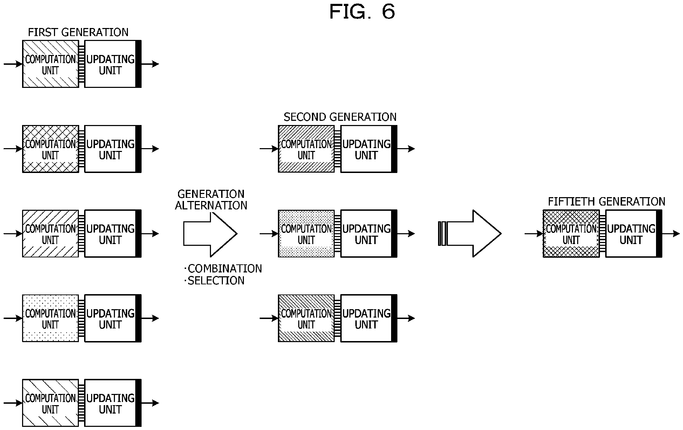

In Embodiment 3, a reservoir design system performs coupling structure change processing by using a genetic algorithm. FIG. 6 is a diagram for explaining a genetic algorithm. As illustrated in FIG. 6, first, a design section 20 prepares a plurality of coupling structures of a first generation. Then, the design section 20 evaluates each coupling structure, and generates mating and mutation of a combination by using a coupling structure having a higher evaluation result. When reaching a determined generation, the design section 20 selects the coupling structure with the minimum error from the coupling structures of the generation.

In Embodiment 3, for example, a change unit 21 generates the coupling structure of each generation by combination and selection of the coupling structures according to the genetic algorithm so that an evaluation result obtained by an evaluation unit 22 is improved by setting a plurality of coupling structures prepared in advance as the first generation. Further, a selection unit 23 selects a coupling structure from the coupling structures of the predetermined generation generated by the change unit 21 based on the evaluation result obtained by the evaluation unit 22.

For example, a reservoir computer 1 optimizes a reservoir by the genetic algorithm in a following procedure. First, the reservoir computer 1 generates a plurality of reservoirs by random coupling to set them as the first generation. The reservoir computer 1 then learns each reservoir of the first generation, derives an objective function from the results, and evaluates an adjacency matrix of each reservoir. Here, the objective function may be one that minimizes errors or one that maximizes learning efficiency. In the present embodiment, the reservoir computer 1 has the fixed number of learning steps and derives the objective function that minimizes errors.

Next, the reservoir computer 1 partially combines the adjacency matrices having high evaluation to generate a reservoir of a second generation. Furthermore, the reservoir computer 1 evaluates the reservoir of the second generation (evaluation of the adjacency matrix), and selects the reservoir having high evaluation from the results.

Hereafter, the reservoir computer 1 repeats above-mentioned steps of generation, combination, and selection to stochastically give noise to the adjacency matrix as the mutation. For example, the reservoir computer 1 gives the noise by changing a real number component of the adjacency matrix to 0 or changing a 0 component to a real number.

### [Processing Flow]

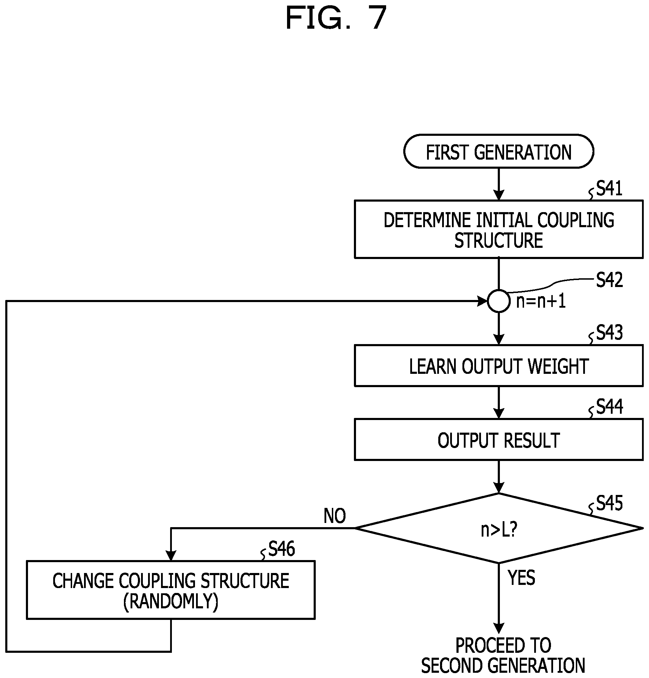

A flow of the coupling structure change processing of the first generation will be described with reference to FIG. 7. FIG. 7 is a flowchart illustrating a flow of coupling structure change processing of a first generation according to Embodiment 3. First, as illustrated in FIG. 7, the design section 20 of the reservoir computer 1 determines an initial coupling structure (step S41). The design section 20 increases n by 1 (step S42). Next, the RC circuit 10 learns an output weight of the output layer (step S43). Then, the computation unit 11 computes the output using the output layer where learning is completed as an initial result (step S44).

Here, when n > L is not satisfied (step S45, No), the design section 20 further randomly changes the coupling structure (step S46). Then, the design section 20 further increases n by 1 (step S42). Consequently, the reservoir computer 1 repeatedly executes the processing of steps S46, S43, and S44 until n exceeds L. L is a predetermined upper limit number of the coupling structures for each generation. In addition, an initial value of n is set to 0. When n > L is satisfied (step S45, Yes), the reservoir computer 1 proceeds to the coupling structure change processing of the second generation.

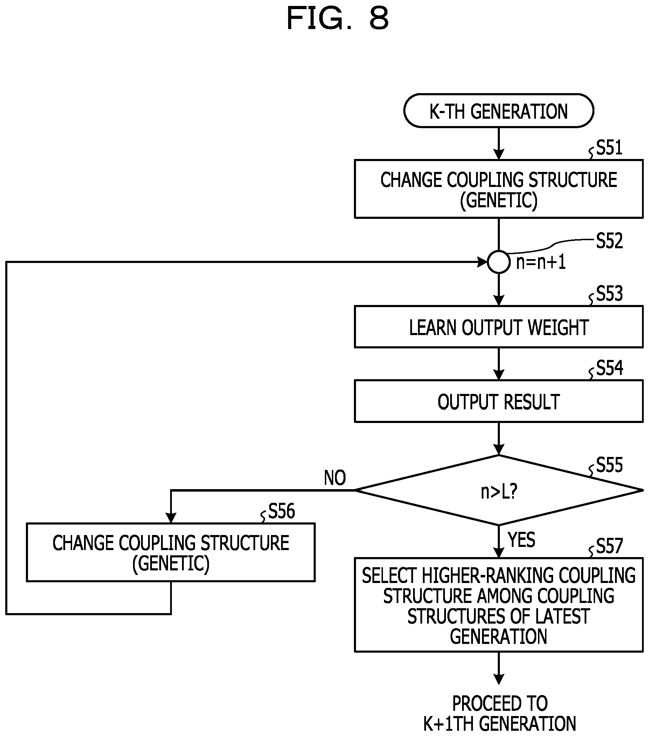

A flow of the coupling structure change processing of a K-th generation will be described with reference to FIG. 8. FIG. 8 is a flowchart illustrating a flow of coupling structure change processing of the K-th generation according to Embodiment 3. K is an integer of 2 or more. First, as illustrated in FIG. 8, the design section 20 of the reservoir computer 1 changes a coupling structure according to the genetic algorithm (step S51). Here, the design section 20 changes by combining and mating the coupling structures of the K-1th generation.

The design section 20 increases n by 1 (step S52). Next, the RC circuit 10 learns the output weight of the output layer (step S53). Then, the computation unit 11 computes the output using the output layer where learning is completed as the initial result (step S54).

Here, when n > L is not satisfied (step S55, No), the design section 20 changes the coupling structure according to the genetic algorithm. (step S56). Here, the design section 20 changes by generating mutation in addition to mating combining the coupling structures of the K-1th generation.

Then, the design section 20 further increases n by 1 (step S52). Consequently, the reservoir computer 1 repeatedly executes the processing of steps S56, S53, and S54 until n exceeds L. When n > L is satisfied (step S55, Yes), the design section 20 selects a higher-ranking coupling structure among the coupling structures of the latest generation (step S57). Furthermore, the reservoir computer 1 proceeds to the coupling structure change processing of a K+1th generation.

In addition, L may become smaller as the generation proceeds. Consequently, the number of obtained coupling structures decreases as the generation proceeds, and the best coupling structure may be finally selected from the small number of coupling structures.

### [Advantages]

The change unit 21 generates the coupling structure of each generation by combination and selection of the coupling structures according to the genetic algorithm so that the evaluation result obtained by the evaluation unit 22 is improved by setting the plurality of coupling structures prepared in advance as the first generation. Further, a selection unit 23 selects a coupling structure from the coupling structures of the predetermined generation generated by the change unit 21 based on the evaluation result obtained by the evaluation unit 22. By using the genetic algorithm as described above, a better reservoir may be obtained than when the coupling structure is randomly changed.

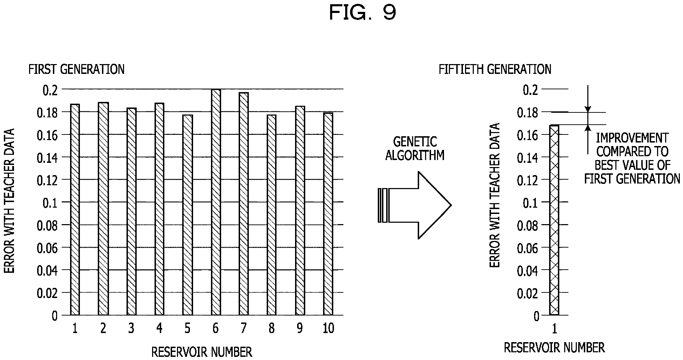

FIG. 9 illustrates results of an experiment. In an example of FIG. 9, the reservoir computer 1 generated 10 reservoirs as the first generation (L = 10). The objective function (error) for evaluating the reservoir of the first generation has a minimum value of 0.1773 at an average of 0.1862. As a result of repeating for 50 generations by the genetic algorithm, the reservoir computer 1 was able to generate a reservoir in which an error value of 0.1673 was obtained.

### [System]

Processing procedures, control procedures, specific names, and information including various kinds of data and parameters indicated in the above-mentioned specification and the drawings may be changed in any manner unless otherwise specified. Specific examples, distributions, numerical values, and so on described in the embodiments are merely examples and may be changed in any manner.

Further, constituent elements of the respective devices illustrated in the drawings are functional conceptual ones and not desired to be configured physically as illustrated in the drawings. That is, specific forms of distribution and integration of the respective devices are not limited to those illustrated in the drawings. In other words, all or some of the devices may be configured to be distributed or integrated functionally or physically in any units depending on various loads, usage conditions, and so on. Furthermore, all or any part of processing functions performed by the respective devices may be realized by a central processing unit (CPU) and a program to be analyzed and executed by the CPU, or may be realized as hardware by wired logic.

A meta-heuristic method for solving a combination optimization problem as well as the genetic algorithm may be used for optimizing the reservoir. For example, the reservoir may be optimized by an annealing method or the like.

### [Hardware]

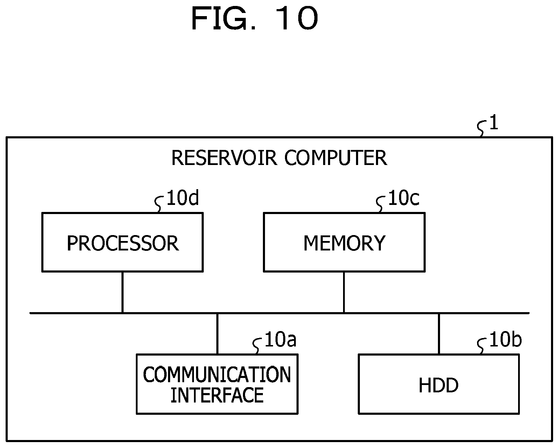

FIG. 10 is a diagram for describing a hardware configuration example. As illustrated in FIG. 10, the reservoir computer 1 includes a communication interface 10a, a hard disk drive (HDD) 10b, a memory 10c, and a processor 10d. Further, the respective units illustrated in FIG. 10 are coupled to each other by a bus or the like.

The communication interface 10a is a network interface card or the like and performs communication with other servers. The HDD 10b stores a program or a database (DB) for operating functions illustrated in FIG. 2.

The processor 10d is a hardware circuit that reads, from the HDD 10b or the like, a program for executing the same processing as each processing unit illustrated in FIG. 2 and loads the program to the memory 10c to operate a process of executing each function described in FIG. 2 or the like. That is, this process executes the same function as each processing unit included in the reservoir computer 1. Specifically, the processor 10d reads a program having the same function as the computation unit 11, an updating unit 12, the change unit 21, the evaluation unit 22, and the selection unit 23 from the HDD 10b or the like. Then, the processor 10d executes a process of executing the same processing as the computation unit 11, the updating unit 12, the change unit 21, the evaluation unit 22, the selection unit 23, and the like.

As described above, the reservoir computer 1 operates as an information processing device that performs a learning method as a result of reading and executing the program. Further, the reservoir computer 1 may also realize the same function as the embodiments described above by reading the program from a recording medium by a medium reading device and executing the read program. In addition, the program described in other embodiments is not limited to a program that is executed by the reservoir computer 1. For example, embodiments of the present invention may also be similarly applied to cases where another computer or a server executes the program and where the other computer and the server execute the program in cooperation with each other.

This program may be distributed via a network such as the Internet. In addition, this program may be recorded on a computer-readable recording medium such as a hard disk, a flexible disk (FD), a compact disc read-only memory (CD-ROM), a magneto-optical disk (MO), or a digital versatile disc (DVD) and may be executed after being read from the recording medium by a computer.

### [CITATION LIST]

### [PATENT LITERATURE]

Japanese Laid-open Patent Publication No. 2018-180701.
International Publication Pamphlet No. WO 2016/194248.

### [REFERENCE SIGNS LIST]

- 1: reservoir computer
- 10: RC circuit
- 11: computation unit
- 12: updating unit
- 13: supply unit
- 20: design section
- 21: change unit
- 22: evaluation unit
- 23: selection unit

## Claims

1. A reservoir computer comprising:
a computation unit configured to compute an output for an input to a neural network including a reservoir that includes a plurality of nodes and has a coupling structure randomly determined between the plurality of nodes, and an output layer having a weight set on each node of the plurality of nodes;
a change unit configured to change the coupling structure between the plurality of nodes included in the reservoir;
an updating unit configured to update the weight of the output layer based on the output computed by the computation unit for each of the coupling structures changed by the change unit;
an evaluation unit configured to evaluate the output computed by the computation unit according to a predetermined criterion; and
a selection unit configured to select a predetermined coupling structure from the coupling structures changed by the change unit based on an evaluation result obtained by the evaluation unit.

2. The reservoir computer according to claim 1, wherein
the change unit is configured to change the coupling structure by a predetermined number of times,
the evaluation unit is configured to compute an error of the output computed by the computation unit with respect to teacher data prepared in advance, as the evaluation result, and
the selection unit is configured to select a coupling structure with the minimum error from the coupling structures changed by the change unit.

3. The reservoir computer according to claim 1, wherein
the evaluation unit is configured to compute an error of the output computed by the computation unit with respect to teacher data prepared in advance, as an evaluation result, every time an update of the weight of the output layer by the updating unit is completed for each of the coupling structures changed by the change unit, and
the selection unit is configured to select a coupling structure corresponding to the error when the error is equal to or less than a threshold value.

4. The reservoir computer according to any preceding claim, wherein
the change unit is configured to generate a coupling structure of each generation by combination and selection of coupling structures according to a genetic algorithm so that an evaluation result obtained by the evaluation unit is improved by setting a plurality of coupling structures prepared in advance as a first generation, and
the selection unit is configured to select a coupling structure from coupling structures of a predetermined generation generated by the change unit based on the evaluation result obtained by the evaluation unit.

5. The reservoir computer according to any preceding claim, wherein
the reservoir is a field-programmable gate array (FPGA), and
the change unit is configured to change the coupling structure by rewriting the FPGA functioning as the reservoir.

6. A reservoir designing method executed by a computer configured to control a neural network including a reservoir and an output layer, the reservoir including a plurality of nodes and having a coupling structure randomly determined between the plurality of nodes, the output layer having a weight set on each node of the plurality of nodes, the method comprising:
changing the coupling structure between the plurality of nodes included in the reservoir;
computing an output for an input to the neural network;
updating the weight of the output layer based on the output for each of the coupling structures changed by the changing;
evaluating the output according to a predetermined criterion; and
selecting a predetermined coupling structure from the coupling structures changed by the changing based on an evaluation result obtained by the evaluating.

7. The reservoir designing method according to claim 6, wherein
the change processing is configured to change the coupling structure by a predetermined number of times,
the evaluation processing is configured to compute, as the evaluation result, an error of the output computed by the computation processing, the error of the output being a difference between the output and training data prepared in advance, and
the selection processing is configured to select a coupling structure with the minimum error from the coupling structures changed by the change processing.

8. The reservoir designing method according to claim 6, wherein
the evaluation processing is configured to compute, as an evaluation result, an error of the output every time an update of the weight of the output layer by the updating processing is completed for each of the coupling structures changed by the change processing, the error of the output being a difference between the output and training data prepared in advance, and
the selection processing is configured to select a coupling structure corresponding to the error when the error is equal to or less than a threshold value.

9. The reservoir designing method according to any of claims 6 to 8, wherein
the change processing is configured to generate a coupling structure of each generation by combination and selection of coupling structures according to a genetic algorithm so that an evaluation result obtained by the evaluation processing is improved by setting a plurality of coupling structures prepared in advance as a first generation, and
the selection processing is configured to select a coupling structure from coupling structures of a predetermined generation generated by the change processing based on the evaluation result obtained by the evaluation processing.

10. The reservoir designing method according to any of claims 6 to 9, wherein
the reservoir is a field-programmable gate array (FPGA), and
the change processing is configured to change the coupling structure by rewriting the FPGA functioning as the reservoir.

11. A reservoir designing program which causes a processor of a computer to perform processing, the computer configured to control a neural network including a reservoir and an output layer, the reservoir including a plurality of nodes and having a coupling structure randomly determined between the plurality of nodes, the output layer having a weight set on each node of the plurality of nodes, the processing comprising:
changing the coupling structure between the plurality of nodes included in the reservoir;
updating the weight of the output layer for each of the coupling structures changed by the changing based on an output for an input to the neural network;
evaluating the output according to a predetermined criterion; and
selecting a predetermined coupling structure from the coupling structures changed by the changing based on an evaluation result obtained by the evaluating.

12. The reservoir designing program according to claim 11, wherein
the change processing is configured to change the coupling structure by a predetermined number of times,
the evaluation processing is configured to compute, as the evaluation result, an error of the output computed by the computation processing, the error of the output being a difference between the output and training data prepared in advance, and
the selection processing is configured to select a coupling structure with the minimum error from the coupling structures changed by the change processing.

13. The reservoir designing program according to claim 11, wherein
the evaluation processing is configured to compute, as an evaluation result, an error of the output every time an update of the weight of the output layer by the updating processing is completed for each of the coupling structures changed by the change processing, the error of the output being a difference between the output and training data prepared in advance, and
the selection processing is configured to select a coupling structure corresponding to the error when the error is equal to or less than a threshold value.

14. The reservoir designing program according to any of claims 11 to 13, wherein
the change processing is configured to generate a coupling structure of each generation by combination and selection of coupling structures according to a genetic algorithm so that an evaluation result obtained by the evaluation processing is improved by setting a plurality of coupling structures prepared in advance as a first generation, and
the selection processing is configured to select a coupling structure from coupling structures of a predetermined generation generated by the change processing based on the evaluation result obtained by the evaluation processing.

15. The reservoir designing program according to any of claims 11 to 14, wherein
the reservoir is a field-programmable gate array (FPGA), and
the change processing is configured to change the coupling structure by rewriting the FPGA functioning as the reservoir.
